# EUROPEAN PATENT SPECIFICATION

(11) **EP 3 379 060 B1**
(45) Date of publication and mention of the grant of the patent: **01.05.2024**
(21) Application number: 18154501.3
(22) Date of filing: 31.01.2018
(51) Int. Cl.: F02N 11/04, F02D 41/26, F02D 41/00, H02P 6/16, F02N 19/00

(54) **SYSTEM AND METHOD FOR ENABLING AN INTEGRATED STARTER GENERATOR CONTROLLER TO ACQUIRE A CRANKSHAFT ANGLE DEGREE FOR A CRANKSHAFT OF AN ENGINE**
SYSTEM UND VERFAHREN ZUR ERMÖGLICHUNG EINES INTEGRIERTEN ANLASSERGENERATORSTEUERGERÄTS ZUR ERFASSUNG EINES KURBELWELLENWINKELGRADS FÜR EINE KURBELWELLE EINES MOTORS
SYSTÈME ET PROCÉDÉ PERMETTANT À UN CONTRÔLEUR DE GÉNÉRATEUR DE DÉMARREUR INTÉGRÉ D'ACQUÉRIR UN DEGRÉ D'ANGLE DE VILEBREQUIN POUR LE VILEBREQUIN D'UN MOTEUR

(30) Priority: 14.03.2017 TW 106108256
(43) Date of publication of application: 26.09.2018
(73) Proprietor: Kwang Yang Motor Co., Ltd., Kaohsiung City 80794 (TW)
(72) Inventor: LIAO, Wei-Xiang, 82055 Kaohsiung City (TW); GUO, Yue-Lin, 70052 Tainan City (TW)
(74) Representative: Zimmermann, Tankred Klaus

(56) References cited:
- EP-A1- 2 990 283
- EP-A2- 1 344 919
- EP-A2- 1 422 421
- EP-A2- 1 457 652
- DE-A1-102015 216 118
- US-A1- 2004 206 325

## Description

The disclosure relates to a system and method for acquiring a crankshaft angle degree for a crankshaft of an engine, more particularly to a system and method for enabling an integrated starter generator controller to acquire a crankshaft angle degree.

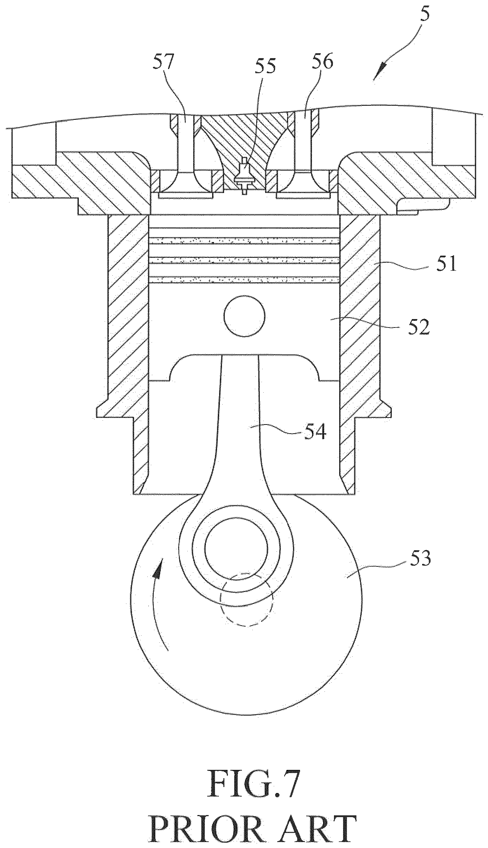

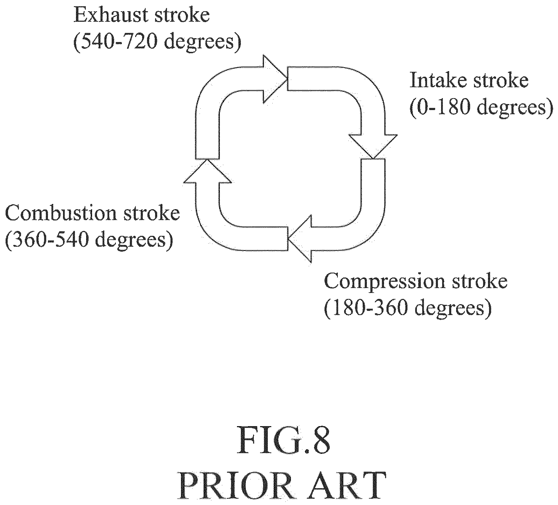

FIG. 7 illustrates a four-stroke engine 5. The four-stroke engine 5 includes a cylinder 51, a piston 52, a crankshaft 53, a coupling rod 54 interconnecting the piston 52 and the crankshaft 53, an igniter 55, an intake valve 56 and an exhaust valve 57. The piston 52 is brought to reciprocate in the cylinder 51 by rotation of the crankshaft 53. The intake valve 56 controls flow of an air-fuel mixture (or atomized fuel) into the cylinder 51 via an inlet where the air-fuel mixture is to be compressed by the piston 52 and ignited by the igniter 55. The exhaust valve 57 controls flow of the air-fuel mixture, which underwent the compression and ignition, out of the cylinder 51 via an outlet. During movement of the piston 52 in the cylinder 51, four separate strokes take place in the four-stroke engine 5, namely, an intake stroke, a compression stroke, a combustion stroke and an exhaust stroke. The four strokes of the four-stroke engine 5 correspond respectively to different angular positions, namely, 0-180 degrees, 180-360 degrees, 360-540 degrees and 540-720 degrees, of the crankshaft 53 as shown in FIG. 8. It should be noted that a complete cycle of the four-stroke engine 5 includes the aforesaid four strokes during which the crankshaft 53 completes two full 360-degree revolutions.

When the crankshaft 53 stops at an angular position corresponding to the compression stroke, compared with a scenario where the crankshaft 53 stops at an angular position not corresponding to the compression stroke (i.e., one of the strokes other than the compression stroke, such as the intake stroke, the combustion stroke or the exhaust stroke), more torque is required to be applied by a starter motor on the crankshaft 53 for restarting the four-stroke engine 5. As a result, more electric power is consumed, and performance of the starter motor may be adversely affected in the long term.

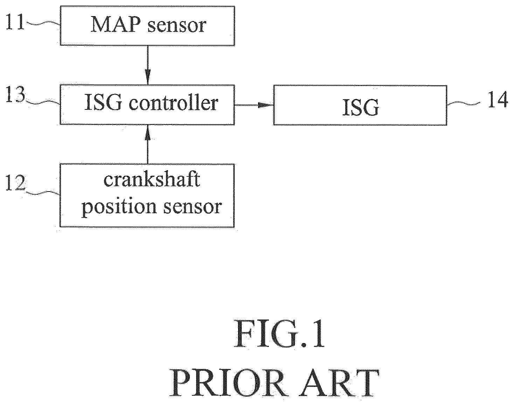

FIG. 1 illustrates a system for implementing a method of reducing a torque for starting an engine disclosed in Taiwanese Invention Patent No. I476320. This method uses an integrated starter generator (ISG) 14 controlled by an ISG controller 13 to intervene rotation of a crankshaft (not shown in FIG. 1) of the engine when the engine is shutting down to thereby stop the crankshaft at a specific angular position where the engine is not in the compression stroke. By this way, a relatively low torque is required for driving the engine in the next starting of the engine.

By virtue of a Manifold Absolute Pressure (MAP) sensor 11 and a crankshaft position sensor 12 that respectively acquire the pressure within an intake manifold of the engine and the angular position of the crankshaft and that are electrically connected to the ISG controller 13 to transmit the same thereto, the ISG controller 13 can obtain a current crankshaft angle degree of the crankshaft to thereby stop the engine at the specific angular position.

However, such implementation requires extra circuits for the ISG controller 13 to read signals from the MAP sensor 11 and the crankshaft position sensor 12, resulting in increase of cost of the entire system. Further, since the MAP sensor 11 and the crankshaft position sensor 12 also provide signals to an engine control unit (not shown) for determining a current stroke of the engine and controlling an ignition and injection timing of the engine, the signals may have distortion due to excessive tapping, resulting in unexpected problems. Additionally, since the ISG controller 13 also receives position information of a rotor (not shown) from a rotor position sensor (not shown), processing of the signals provided by the MAP sensor 11 and the crankshaft position sensor 12 may increase computational load for the ISG controller 13, which may delay signal output of the ISG controller 13 for controlling operation of the ISG 14.

The patent applications DE 10 2015 216 118 A1 and EP 1 344 919 A2 disclose similar systems and methods**.**

Therefore, an object of the disclosure is to provide a system according to claim 4 and method according to claim 1 for obtaining a crankshaft angle degree relating to a crankshaft of an engine without directly receiving information obtained from a MAP sensor and a crankshaft position sensor.

According to one aspect of the disclosure, a method for enabling an integrated starter generator (ISG) controller to acquire a crankshaft angle degree for a crankshaft of an engine through an engine control unit (ECU) is provided. The ISG controller controls operation of an ISG including a rotor, acquires a rotor-derived crankshaft angle degree based on a rotor position of the rotor, and controls the ISG to intervene rotation of the crankshaft based on the rotor-derived crankshaft angle degree when the engine is shutting down. The ECU controls operation of the engine, and detects an angle degree of the crankshaft to acquire a detected crankshaft angle degree after the engine has been stared. The method includes:
providing the ISG controller that is electrically connected to the ECU and that controls the ISG to intervene rotation of the crankshaft based on the rotor-derived crankshaft angle degree when the engine is shutting down ;
transmitting to the ISG controller, by the ECU, an angle-setting trigger upon determining that the detected crankshaft angle degree is equal to a predetermined angle degree when the engine has been started; and
setting, by the ISG controller, the rotor-derived crankshaft angle degree to the predetermined angle degree upon receipt of the angle-setting trigger.

According to another aspect of this disclosure, a system is proposed to include an ECU and an ISG controller, where the ISG controller acquires a crankshaft angle degree for a crankshaft of an engine through the ECU. The ECU is configured to control operation of the engine, to detect an angle degree of the crankshaft to acquire a detected crankshaft angle degree after the engine has been stared, and to output an angle-setting trigger upon determining that the detected crankshaft angle degree is equal to a predetermined angle degree. The ISG controller is configured to control operation of an ISG including a rotor, to acquire a rotor-derived crankshaft angle degree based on a rotor position of the rotor, and to control the ISG to intervene rotation of the crankshaft based on the rotor-derived crankshaft angle degree when the engine is shutting down. The ISG controller is electrically connected to the ECU for receiving the angle-setting trigger and is configured to set the rotor-derived crankshaft angle degree to the predetermined angle degree upon receipt of the angle-setting trigger.

Other features and advantages of the disclosure will become apparent in the following detailed description of the embodiment (s) with reference to the accompanying drawings, of which:
FIG. 1 is schematic block diagram of a system for implementing a method for reducing a torque for starting an engine disclosed in Taiwanese Patent No. 1476320;
FIG. 2 is a fragmentary sectional view of an engine and an integrated starter generator (ISG) of a system according to an embodiment of this disclosure;
FIG. 3 is a block diagram illustrating the system of the embodiment that implements a method for enabling an ISG controller to acquire a crankshaft angle degree for a crankshaft of an engine through an ECU according to this disclosure;
FIG. 4 is a timing diagram exemplifying a relationship between an angle-setting signal and a rotor-derived crankshaft angle degree for this embodiment;
FIG. 5 is a flow chart of the method for enabling the ISG controller to acquire the crankshaft angle degree through the ECU according to one embodiment of the disclosure;
FIG. 6 is a flow chart illustrating an operation logic for intervening rotation of the crankshaft based on the rotor-derived crankshaft angle degree when the engine is shutting down;
FIG. 7 is a schematic diagram illustrating an embodiment of a four-stroke engine; and
FIG. 8 is a schematic diagram illustrating an embodiment of correspondence relationships between angular positions of the crankshaft and four strokes of the four-stroke engine.

Before the disclosure is described in greater detail, it should be noted that where considered appropriate, reference numerals or terminal portions of reference numerals have been repeated among the figures to indicate corresponding or analogous elements, which may optionally have similar characteristics.

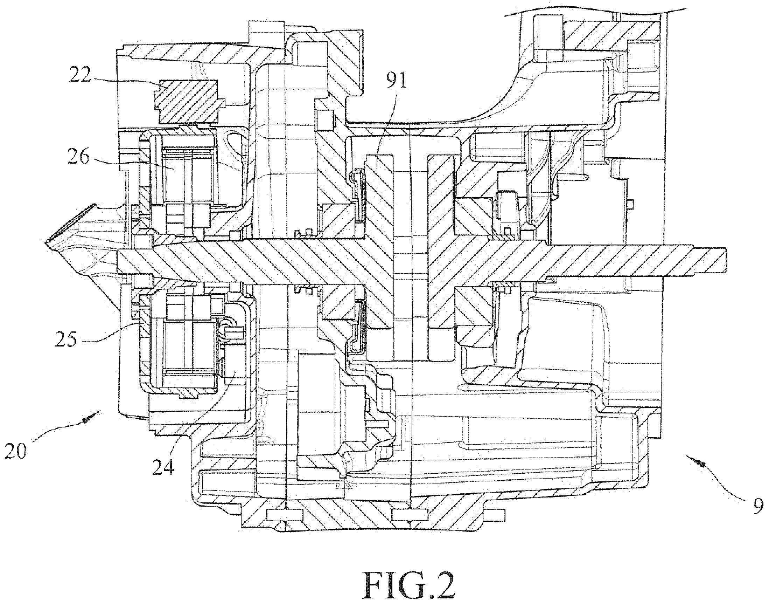

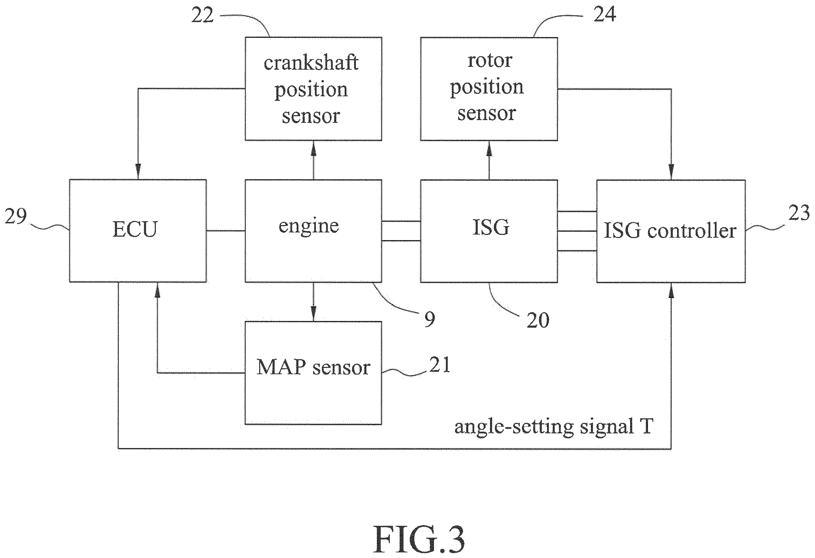

Referring to FIGS. 2 and 3, an exemplary system is adapted to implement an embodiment of a method for enabling an ISG controller 23 to acquire a crankshaft angle degree for a crankshaft 91 of an engine 9 through an ECU 29. The exemplary system includes the ISG controller 23, a rotor position sensor 24 and the ECU 29. The ISG controller 23 is electrically connected to and controls operation of an ISG 20. The ISG 20 includes a rotor 25 and a stator 26 cooperating with each other to directly turn the crankshaft 91 without transmission. The rotor position sensor 24 generally uses three Hall sensors mounted to the stator 26 to sense position of the rotor 25 and outputs rotor position information which indicates the sensed position of the rotor 25 (also referred to as "rotor position"). The ISG controller 23 is electrically coupled to the rotor position sensor 24 for receiving the rotor position information therefrom, and derives a crankshaft angle degree (referred to as rotor-derived crankshaft angle degree hereinafter) based on the rotor position information. Since the rotor 25 may have the same rotational speed as the crankshaft 91, the rotor-derived crankshaft angle degree may change with the rotation of the rotor 25. Although the rotor-derived crankshaft angle degree and an actual crankshaft angle degree may have the same change rate, the rotor-derived crankshaft angle degree may still be inconsistent with the actual crankshaft angle degree because the ISG controller 23 does not have information about an initial position of the crankshaft 91. In this embodiment, the ISG controller 23 controls the ISG 20 to intervene rotation of the crankshaft 91 based on the rotor-derived crankshaft angle degree when the engine 9 is shutting down to thereby stop the crankshaft 91 at a specific position where the engine 9 is not in a compression stroke, so it is necessary to make the rotor-derived crankshaft angle degree consistent with the actual crankshaft angle degree, which is detected by the ECU 29. In one embodiment, the crankshaft 91 of the engine 9 is stopped at a position where the engine 9 is at the combustion stroke when the engine 9 is shutting down. In this embodiment, the ECU 29 is electrically connected to a Manifold Absolute Pressure (MAP) sensor 21 that detects the pressure within an intake manifold (not shown) of the engine 9, and a crankshaft position sensor 22 that detects an angular position of the crankshaft 91, thereby detecting the actual crankshaft angle degree based on the pressure within an intake manifold and the angular position of the crankshaft 91, and thus acquiring a detected crankshaft angle degree. In other embodiments, the ECU 29may acquire the detected crankshaft angle degree with reference to change in a rotation speed of the engine 9 and/or data acquired by a variable reluctance wheel speed sensor, and the disclosure is note limited in this respect.

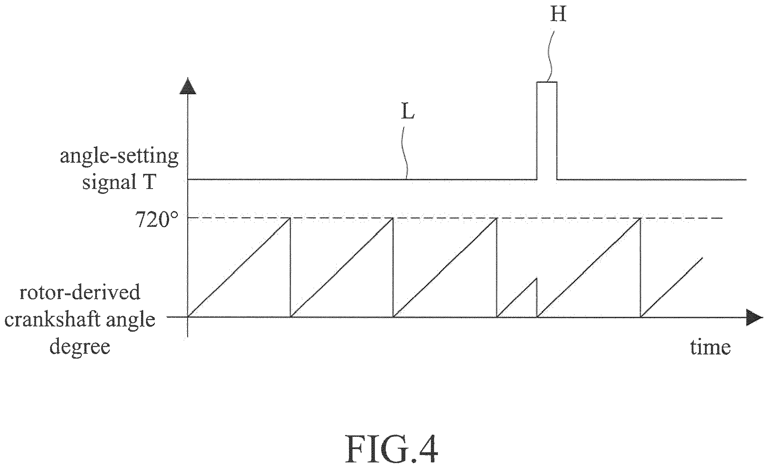

The ECU 29 is further electrically connected to the ISG controller 23 and the engine 9, is configured to control operation of the engine 9, such as ignition and injection timing, and to transmit an angle-setting signal to the ISG controller 23 after acquiring the detected crankshaft angle degree. In this embodiment, the angle-setting signal is a voltage signal, and the ECU 29 causes the angle-setting signal to have a first voltage level to serve as an angle-setting trigger (e.g. , the high voltage level (H) as shown in FIG. 4) when determining that the detected crankshaft angle degree is equal to a predetermined angle degree, and causes the angle-setting signal to have a second voltage level that is different from the first voltage level (e.g., the low voltage level (L) as shown in FIG. 4) when determining that the detected crankshaft angle degree is not equal to the predetermined angle degree . In this embodiment, the engine 9 is a four-stroke engine. The engine 9 is in an intake stroke when the crankshaft 91 is at an angle degree of between 0 degrees and 180 degrees, the engine 9 is in a compression stroke when the crankshaft 91 is at an angle degree of between 180 degrees and 360 degrees, the engine 9 is in a combustion stroke when the crankshaft 91 is at an angle degree of between 360 degrees and 540 degrees, and the engine 9 is in an exhaust stroke when the crankshaft 91 is at an angle degree of between 540 degrees and 720 (or 0) degrees. The engine 9 completes one cycle of operation after the four strokes are completed.

The ISG controller 23 is configured to receive the rotor position information from the rotor position sensor 24, and renders different conduction manners for the ISG 20 according to different rotor positions, thereby controlling starting operation and power generating operation of the ISG 20. In this embodiment, the ISG controller 23 is configured to update the rotor-derived crankshaft angle degree based on the rotor position information, and to make the rotor-derived crankshaft angle degree consistent with the detected crankshaft angle degree based on the angle-setting trigger from the ECU 29 (e.g., setting the rotor-derived crankshaft angle degree to the predetermined angle degree at a time of receipt of the angle-setting trigger).

After the rotor-derived crankshaft angle degree is made consistent with the detected crankshaft angle degree, the ISG controller 23 continuously calculates the rotor-derived crankshaft angle degree based on the latest rotor-derived crankshaft angle degree and the rotor position information (e.g., continuously updating the rotor-derived crankshaft angle degree based on the rotor position information from the time the rotor-derived crankshaft angle degree is made equal to the predetermined angle degree), thereby keeping the rotor-derived angle degree consistent with the actual crankshaft angle degree.

As exemplified FIG. 4, the ECU 29 successfully acquires the detected crankshaft angle degree after the engine 9 has been started for three cycles of operation, and then transmits the angle-setting trigger (H) to the ISG controller 23 when determining that the detected crankshaft angle degree is equal to the predetermined angle degree θ in the fourth cycle of operation. In this embodiment, the predetermined angle degree 0 is zero degrees, and the ISG controller 23 sets, upon receipt of the angle-setting trigger (H), the rotor-derived crankshaft angle degree to the predetermined angle degree θ (i.e., zero degrees), which is equal to the detected crankshaft angle degree at that time, so as to complete harmonization between the detected crankshaft angle degree and the rotor-derived crankshaft angle degree . It is noted that, in this embodiment, the predetermined angle degree, which may be any degree between 0 degrees and 720 degrees, is predetermined for (e.g., known in advance by) both of the ECU 29 and the ISG controller 23. In other embodiments, the predetermined angle degree may be predetermined only for the ECU 29, and the angle-setting signal transmitted by the ECU 29 may be a communication signal capable of carrying messages, and the angle-setting trigger may carry a message of the predetermined angle degree, so that the ISG controller 23 may acquire the predetermined angle degree from the message carried by the angle-setting trigger. For example, the ECU 29 may transmit the angle-setting signal on a basis of a communication interface based on, for example, universal asynchronous receiver/transmitter (UART), controller area network (CAN), etc., so that the ISG controller 23 can set the rotor-derived crankshaft angle degree to the predetermined angle degree that is indicated by the angle-setting trigger.

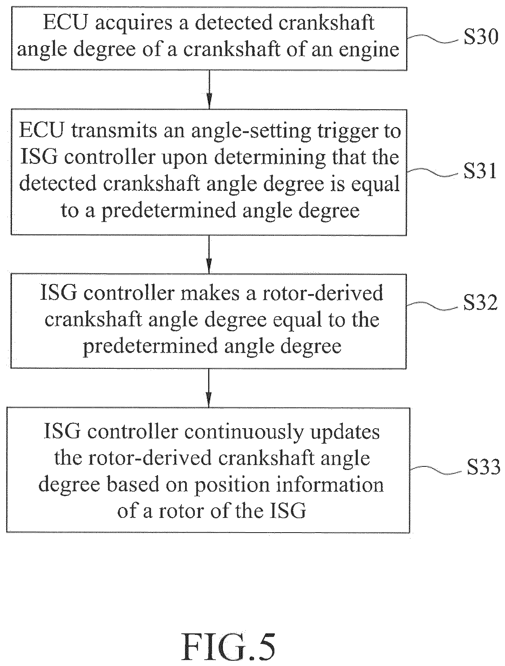

Further referring to FIGS. 5, the method for enabling the ISG controller 23 to acquire a crankshaft angle degree through the ECU 29 is illustrated. After the engine 9 is started, in step S30, the ECU 29 acquires a detected crankshaft angle degree of the crankshaft 91 of the engine 9.

Following step S30, in step S31, the ECU 29 transmits the angle-setting trigger to the ISG controller 23 upon determining that the detected crankshaft angle degree is equal to the predetermined angle degree.

Additionally, although the angle-setting signal (T) shown in FIG. 4 includes only one angle-setting trigger (H), the present disclosure is not limited in this respect. In other embodiments, the ECU 29 may output the angle-setting trigger (H) periodically to the ISG controller 23, e.g., upon the detected crankshaft angle degree being 0 degrees in every cycle of operation (i. e. , 720 degrees) of the engine 9.

Upon receipt of the angle-setting trigger (H), in step S32, the ISG controller 23 makes the rotor-derived crankshaft angle degree consistent with the detected crankshaft angle degree; that is, the ISG controller 23 makes the rotor-derived crankshaft angle degree equal to the predetermined angle degree, e.g., 0 degrees in this embodiment.

After step S32 is performed, in step S33, the ISG controller 23 continuously calculates the rotor-derived crankshaft angle degree based on the latest rotor-derived crankshaft angle degree and the rotor position information outputted by the rotor position sensor 24 in a manner of, for example but not limited to, continuously updating the rotor-derived crankshaft angle degree based on the rotor position information from the time the rotor-derived crankshaft angle degree is made equal to the predetermined angle degree.

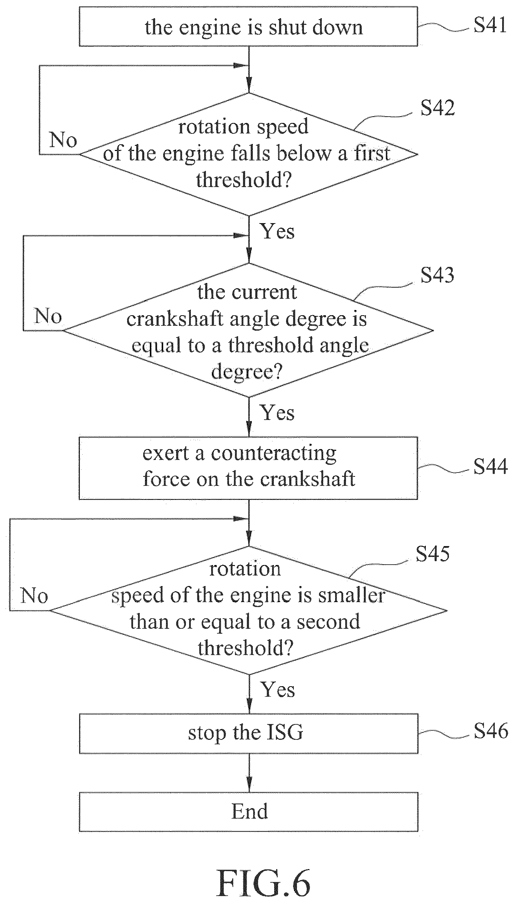

After being made consistent with the detected crankshaft angle degree, the rotor-derived crankshaft angle degree is referred to as the current actual crankshaft angle degree and can be used in a crankshaft positioning process (see FIG. 6), which is proposed in Taiwanese Invention Patent No. 1476320 for reducing a torque for starting the engine 9 by stopping the crankshaft 91 at a desired/specific position in a post engine shutdown control process. The following descriptions are merely for illustrating how the rotor-derived crankshaft angle degree can be used in a practical application, and the system and related components disclosed in FIGS. 1-3 are utilized to implement the method in FIG. 6, and the present disclosure is not limited in this respect.

In step S41, the engine 9 is shut down by a user. Subsequent to step S41, in step S42, the ISG controller 23 determines whether a rotation speed of the engine 9 (i.e., the rotation speed of the crankshaft 91) falls below a first threshold based on the rotor position information. The flow goes to stepS43 when affirmative, and step S42 is repeated when otherwise. Step S42 ensures that the crankshaft 91 does not stop at an undesired position (angle) due to inertia during the engine shutdown process. In this embodiment, the first threshold may be, for example but not limited to, 800 rotations per minute (RPM).

In step S43, the ISG controller 23 determines whether the rotor-derived crankshaft angle degree is equal to a threshold angle degree. The flow goes to step S44 when affirmative, and goes back to step S43 when otherwise.

In step S44, the ISG controller 23 controls the ISG 20 to intervene rotation of the crankshaft 91 based on the rotor-derived crankshaft angle. In this embodiment, the ISG 20 is controlled to exert a counteracting force on the crankshaft 91. In view of steps S43 and S44, the threshold angle degree is set to define a timing that the counteracting force is to be exerted in order to ensure that the crankshaft 91 stops at a specific position where the engine 9 is not in the compression stroke. For example, an angle degree of the crankshaft 91 corresponding to a top dead centre in the compression stroke can be set as the threshold angle degree.

Following step S44, in step S45, the ISG controller 23 determines whether the rotation speed of the engine 9 is smaller than or equal to a second threshold. When affirmative, the flow goes to step S46, and goes back to step S45 when otherwise. That is to say, the ISG 20 is controlled to exert the counteracting force on the crankshaft 91 until the rotation speed of the engine 9 is smaller than or equal to the second threshold. In this embodiment, the second threshold is exemplified to be 0 RPM, i.e., when the ISG controller 23 determines that the rotation speed of the engine 9 is equal to 0 RPM, the crankshaft positioning process has been completed. Subsequently, in step S46, the ISG controller 23 stops operation thereof in order to prevent reversal of the engine 9 due to the counteracting force exerted by the ISG 20.

To sum up, the present disclosure can provide one or more of the following advantages.

One advantage of this disclosure may be that, by virtue of transmission of the angle-setting signal by the ECU 29 to the ISG controller 23, the rotor-derived crankshaft angle degree acquired by the ISG controller 23 is made equal to the detected crankshaft angle degree acquired by the ECU 29, and provision of the signals generated by the crankshaft position sensor 22 and the MAP sensor 21 directly to the ISG controller 23 is not required, thereby preventing distortion of the signals generated by the sensors 21, 22, which may adversely affect engine control. Further, since the ISG controller 23 need not perform computation on signals from the MAP sensor 21 and the crankshaft position sensor 22 to acquire the actual crankshaft angle degree, computational load of the ISG controller 23 can be relatively low as compared to the conventional system shown in FIG. 1.

One advantage of this disclosure may be that since the angle-setting signal is a voltage signal, design for hardware of the ISG controller 23 can be relatively simple.

One advantage of this disclosure may be that, when the ISG controller 23 and the ECU 29 are originally capable of communicating with each other, the harmonization of the rotor-derived crankshaft angle degree with the detected crankshaft angle degree can be integrated into the communication therebetween, thus modification to hardware of the ISG controller 23 is not required.

One advantage of this disclosure may be that after the rotor-derived crankshaft angle degree is harmonized with the detected crankshaft angle degree, the ISG controller 23 is able to continuously obtain a current actual angle degree of the crankshaft 91 by continuously updating the harmonized rotor-derived crankshaft angle degree based on the position information of the rotor 25 detected by the rotor position sensor 24.

In the description above, for the purposes of explanation, numerous specific details have been set forth in order to provide a thorough understanding of the embodiment (s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. Amethod for enabling an integrated starter generator controller, ISG controller (23), to acquire a crankshaft angle degree for a crankshaft (91) of an engine (9) through an engine control unit, ECU (29),
wherein the ISG controller (23) is controlling operation of an integrated starter generator, ISG (20) that includes a rotor (25) and is acquiring a rotor-derived crankshaft angle degree based on a rotor position of the rotor (25),
wherein the ECU (29) is controlling operation of the engine (9), and is detecting an angle degree of the crankshaft (91) to acquire a detected crankshaft angle degree after the engine (9) has been started;
wherein the ISG controller (23) is electrically connected to the ECU (29) and controls the ISG (20) to intervene in the rotation of the crankshaft (91) based on the rotor-derived crankshaft angle degree when the engine (9) is shutting down;
the method being **characterised by**
transmitting from the ECU (29) to the ISG controller (23) an angle-setting trigger signal upon determining that the detected crankshaft angle degree is equal to a predetermined angle degree when the engine (9) has been started, the angle-setting trigger signal indicating that
the predetermined angle degree is 0 degree; and
setting, by the ISG controller (23), the rotor-derived crankshaft angle degree to the predetermined angle degree upon receipt of the angle-setting trigger signal.

2. The method as claimed in Claim 1, wherein the angle-setting trigger signal is a voltage signal, at a first voltage level upon determining that the detected crankshaft angle degree is equal to the predetermined angle degree; and at a second voltage level that is different from the first voltage level upon determining that the detected crankshaft angle degree is not equal to the predetermined angle degree.

3. The method as claimed in any one of the preceding claims, further **characterized by**, after the setting the rotor-derived crankshaft angle degree to the predetermined angle degree, continuously updating, by the ISG controller (23), the rotor-derived crankshaft angle degree based on the rotor position, which is detected by a rotor position sensor (24) coupled to the ISG controller (23).

4. A system including:
an engine control unit, ECU (29) configured to control operation of an engine (9) that includes a crankshaft (91), and to detect an angle degree of the crankshaft (91) to acquire a detected crankshaft angle degree after the engine (9) has been started; and
an integrated starter generator controller, ISG controller (23) configured to control operation of an integrated starter generator, ISG (20), which includes a rotor (25), and to acquire a rotor-derived crankshaft angle degree based on a rotor position of the rotor (25),
wherein
said ISG controller (23) is configured to control the ISG (20) to intervene in the rotation of the crankshaft (91) based on the rotor-derived crankshaft angle degree when the engine (9) is shutting down;
the system being **characterised in that** said ECU (29) is further configured to output an angle-setting trigger signal upon determining that the detected crankshaft angle degree is equal to a predetermined angle degree, the angle setting trigger signal indicating that the predetermined angle degree is 0 degree and **in that** said ISG controller (23) is electrically coupled to said ECU (29) for receiving the angle-setting trigger signal therefrom, and is further configured to set the rotor-derived crankshaft angle degree to the predetermined angle degree upon receipt of the angle-setting trigger signal.

5. The system as claimed in Claim 4, wherein the angle-setting trigger signal is a voltage signal at a first voltage level that serves when said ECU (29) determines that the detected crankshaft angle degree is equal to the predetermined angle degree, and at a second voltage level different from the first voltage level when said ECU (29) determines that the detected crankshaft angle degree is not equal to the predetermined angle degree.

6. The system as claimed in any one of Claims 4 and 5, further **characterized by** a rotor position sensor (24) coupled to said ISG controller (23) and configured to detect a position information of the rotor (25) of the ISG (20) that indicates the rotor position of the rotor (25), said ISG controller (23) continuously updating, after the rotor-derived crankshaft angle degree is set to the predetermined angle degree, the rotor-derived crankshaft angle degree based on the position information detected by said rotor position sensor (24) .

## Patentansprüche

1. Ein Verfahren zum Ermöglichen, dass eine Integrierter-Startergenerator-Steuerung, ISG-Steuerung (23), einen Kurbelwellenwinkelgrad für eine Kurbelwelle (91) eines Motors (9) durch eine Motorsteuerungseinheit, ECU (29), zu erfassen,
wobei die ISG-Steuerung (23) einen Betrieb eines integrierten Startergenerators, ISG (20), der einen Rotor (25) umfasst, steuert und einen vom Rotor abgeleiteten Kurbelwellenwinkelgrad auf Basis einer Rotorposition des Rotors (25) erfasst,
wobei die ECU (29) einen Betrieb des Motors (9) steuert und einen Winkelgrad der Kurbelwelle (91) detektiert, um einen detektierten Kurbelwellenwinkelgrad nach Starten des Motors (9) zu erfassen;
wobei die ISG-Steuerung (23) elektrisch mit der ECU (29) verbunden ist und den ISG (20) auf Basis des vom Rotor abgeleiteten Kurbelwellenwinkelgrads steuert, um in die Drehung der Kurbelwelle (91) einzugreifen, wenn der Motor (9) abgeschaltet wird;
wobei das Verfahren **gekennzeichnet ist durch**
Senden, von der ECU (29) an die ISG-Steuerung (23), eines Winkeleinstellungsauslösersignals, wenn bestimmt wird, dass der detektierte Kurbelwellenwinkelgrad einem vorbestimmten Winkelgrad gleicht, wenn der Motor (9) gestartet wurde, wobei das Winkeleinstellungsauslösersignal anzeigt, dass der vorbestimmte Winkelgrad 0 Grad beträgt; und
Einstellen, durch die ISG-Steuerung (23), des von dem Rotor abgeleiteten Kurbelwellenwinkelgrads auf den vorbestimmten Winkelgrad bei Empfang des Winkeleinstellungsauslösersignals.

2. Das Verfahren gemäß Anspruch 1, bei dem das Winkeleinstellungsauslösersignal ein Spannungssignal ist, auf einem ersten Spannungspegel, wenn bestimmt wird, dass der detektierte Kurbelwellenwinkelgrad dem vorbestimmten Winkelgrad gleicht; und
auf einem zweiten Spannungspegel, der sich von dem ersten Spannungspegel unterscheidet, wenn bestimmt wird, dass der detektierte Kurbelwellenwinkelgrad dem vorbestimmten Winkelgrad nicht gleicht.

3. Das Verfahren gemäß einem der vorhergehenden Ansprüche, das ferner **gekennzeichnet ist durch** kontinuierliches Aktualisieren, nach dem Einstellen des vom Rotor abgeleiteten Kurbelwinkelgrads auf den vorbestimmten Winkelgrad, durch die ISG-Steuerung (23), des vom Rotor abgeleiteten Kurbelwellenwinkelgrad auf Basis der Rotorposition, die von einem Rotorpositionssensor (24) detektiert wird, der an die ISG-Steuerung (23) gekoppelt ist.

4. Ein System, das folgende Merkmale umfasst:
eine Motorsteuerungseinheit, ECU (29), die dazu konfiguriert ist, einen Betrieb eines Motors (9) zu steuern, die eine Kurbelwelle (91) umfasst, und einen Winkelgrad der Kurbelwelle (91) zu detektieren, um einen detektierten Kurbelwellenwinkelgrad zu erfassen, nachdem der Motor (9) gestartet wurde; und
eine Integrierter-Startergenerator-Steuerung, ISG-Steuerung (23), die dazu konfiguriert ist, einen Betrieb eines integrierten Startergenerators, ISG (20), zu steuern, der einen Rotor (25) umfasst, und einen vom Rotor abgeleiteten Kurbelwellenwinkelgrad auf Basis einer Rotorposition des Rotors (25) zu erfassen,
wobei die ISG-Steuerung (23) dazu konfiguriert ist, den ISG (20) auf Basis des vom Rotor abgeleiteten Kurbelwellenwinkelgrads zu steuern, um in die Drehung der Kurbelwelle (91) einzugreifen, wenn der Motor (9) abgeschaltet wird;
wobei das System **dadurch gekennzeichnet ist, dass** die ECU (29) ferner dazu konfiguriert ist, ein Winkeleinstellungsauslösersignal auszugeben, wenn bestimmt wird, dass der detektierte Kurbelwellenwinkelgrad einem vorbestimmten Winkelgrad gleicht, wobei das Winkeleinstellungsauslösersignal anzeigt, dass der vorbestimmte Winkelgrad 0 Grad beträgt, und dass die ISG-Steuerung (23) elektrisch an die ECU (29) gekoppelt ist, um das Winkeleinstellungsauslösersignal davon zu empfangen, und die ferner dazu konfiguriert ist, bei Empfang des Winkeleinstellungsauslösersignals den vom Rotor abgeleiteten Kurbelwellenwinkelgrad auf den vorbestimmten Winkelgrad einzustellen.

5. Das System gemäß Anspruch 4, bei dem das Winkeleinstellungsauslösersignal ein Spannungssignal bei einem ersten Spannungspegel ist, das aktiv ist, wenn die ECU (29) bestimmt, dass der detektierte Kurbelwellenwinkelgrad dem vorbestimmten Winkelgrad gleicht, und bei einem zweiten Spannungspegel, der sich von dem ersten Spannungspegel unterscheidet, wenn die ECU (29) bestimmt, dass der detektierte Kurbelwellenwinkelgrad dem vorbestimmten Winkelgrad nicht gleicht.

6. Das System gemäß einem der Ansprüche 4 und 5, das ferner **gekennzeichnet ist durch** einen Rotorpositionssensor (24), der mit der ISG-Steuerung (23) gekoppelt ist und dazu konfiguriert ist, eine Positionsinformation des Rotors (25) des ISG (20) zu detektieren, die die Rotorposition des Rotors (25) anzeigt, wobei die ISG-Steuerung (23), nachdem der vom Rotor abgeleitete Kurbelwellenwinkelgrad auf den vorbestimmten Winkelgrad eingestellt wurde, den vom Rotor abgeleiteten Kurbelwellenwinkelgrad auf Basis der Positionsinformation, die von dem Rotorpositionssensor (24) detektiert wurde, kontinuierlich aktualisiert.

## Revendications

1. Procédé pour permettre à un moyen de commande de générateur de démarreur intégré, moyen de commande ISG (23), d'acquérir un degré d'angle de vilebrequin pour un vilebrequin (91) d'un moteur (9) par l'intermédiaire d'une unité de commande de moteur, ECU (29),
dans lequel le moyen de commande ISG (23) commande le fonctionnement d'un générateur de démarreur intégré, ISG, (20) qui comporte un rotor (25) et acquiert un degré d'angle de vilebrequin dérivé du rotor sur base d'une position du rotor (25), dans lequel l'ECU (29) commande le fonctionnement du moteur (9) et détecte un degré d'angle du vilebrequin (91) pour acquérir un degré d'angle de vilebrequin détecté après le démarrage du moteur (9);
dans lequel le moyen de commande ISG (23) est connecté électriquement à l'ECU (29) et commande l'ISG (20) pour intervenir dans la rotation du vilebrequin (91) sur base du degré d'angle du vilebrequin dérivé du rotor lorsque le moteur (9) est arrêté;
le procédé étant **caractérisé par** le fait de
transmettre, de l'ECU (29) au moyen de commande ISG (23), un signal de déclenchement de réglage d'angle à la détermination que le degré d'angle de vilebrequin détecté est égal à un degré d'angle prédéterminé lorsque le moteur (9) a été démarré, le signal de déclenchement de réglage d'angle indiquant que le degré d'angle prédéterminé est de 0 degré; et
régler, par le moyen de commande ISG (23), le degré d'angle de vilebrequin dérivé du rotor au degré d'angle prédéterminé à la réception du signal de déclenchement de réglage d'angle.

2. Procédé selon la revendication 1, dans lequel le signal de déclenchement de réglage d'angle est un signal de tension transmis à un premier niveau de tension à la détermination que le degré d'angle de vilebrequin détecté est égal au degré d'angle prédéterminé; et
à un deuxième niveau de tension, qui est différent du premier niveau de tension, à la détermination que le degré d'angle de vilebrequin détecté n'est pas égal au degré d'angle prédéterminé.

3. Procédé selon l'une quelconque des revendications précédentes, **caractérisé par** ailleurs par le fait de mettre à jour en continu, par le moyen de commande ISG (23), après le réglage du degré d'angle de vilebrequin dérivé du rotor au degré d'angle prédéterminé, le degré d'angle de vilebrequin dérivé du rotor sur base de la position de rotor qui est détectée par un capteur de position du rotor (24) couplé au moyen de commande ISG (23).

4. Système comportant:
une unité de commande de moteur, ECU, (29) configurée pour commander le fonctionnement d'un moteur (9) qui comporte un vilebrequin (91), et pour détecter un degré d'angle du vilebrequin (91) pour acquérir un degré d'angle de vilebrequin détecté après que le moteur (9) a été démarré; et
un moyen de commande de générateur de démarreur intégré, un moyen de commande, ISG, (23), configuré pour commander le fonctionnement d'un générateur de démarreur intégré, ISG, (20), qui comporte un rotor (25), et pour acquérir un degré d'angle de vilebrequin dérivé du rotor sur base d'une position du rotor (25),
dans lequel ledit moyen de commande ISG (23) est configuré pour commander l'ISG (20) pour intervenir dans la rotation du vilebrequin (91) sur base du degré d'angle de vilebrequin dérivé du rotor lorsque le moteur (9) s'arrête;
le système étant **caractérisé par le fait que** ladite ECU (29) est par ailleurs configurée pour sortir un signal de déclenchement de réglage d'angle à la détermination que le degré d'angle de vilebrequin détecté est égal à un degré d'angle prédéterminé, le signal de déclenchement de réglage d'angle indiquant que le degré d'angle prédéterminé est de 0 degré et que ledit moyen de commande ISG (23) est couplé électriquement à ladite ECU (29) pour recevoir le signal de déclenchement de réglage d'angle à partir de ce dernier, et est par ailleurs configuré pour régler le degré d'angle de vilebrequin dérivé du rotor au degré d'angle prédéterminé à la réception du signal de déclenchement de réglage d'angle.

5. Système selon la revendication 4, dans lequel le signal de déclenchement de réglage d'angle est un signal de tension transmis à un premier niveau de tension qui sert lorsque ladite ECU (29) détermine que le degré d'angle de vilebrequin détecté est égal au degré d'angle prédéterminé, et à un deuxième niveau de tension, différent du premier niveau de tension, lorsque ladite ECU (29) détermine que le degré d'angle de vilebrequin détecté n'est pas égal au degré d'angle prédéterminé.

6. Système selon l'une quelconque des revendications 4 et 5, **caractérisé par** ailleurs par un capteur de position de rotor (24) couplé audit moyen de commande ISG (23) et configuré pour détecter une information de position du rotor (25) de l'ISG ( 20) qui indique la position du rotor (25), ledit moyen de commande ISG (23) mettant à jour en continu, après que le degré d'angle de vilebrequin dérivé du rotor soit réglé au degré d'angle prédéterminé, le degré d'angle de vilebrequin dérivé du rotor sur base des informations de position détectées par ledit capteur de position de rotor (24).
